# FASCICULE DE BREVET EUROPEEN

(11) **EP 3 172 962 B1**
(45) Date de publication et mention de la délivrance du brevet: **16.09.2020**
(21) Numéro de dépôt: 15306867.1
(22) Date de dépôt: 25.11.2015
(51) Int. Cl.: A01K 73/06

(54) **REA DE POULIE DE HALAGE COMPRENANT DES PLAQUES DE REVÊTEMENT, POULIE DE HALAGE COMPRENANT UN TEL REA ET PLAQUES DE REVÊTEMENT POUR UN TEL REA**
SCHEIBE EINER ROLLE ZUM EINHOLEN DER LEINE, DIE VERKLEIDUNGSPLATTEN UMFASST, ROLLE ZUM EINHOLEN DER LEINE, DIE EINE SOLCHE SCHEIBE UMFASST, UND VERKLEIDUNGSPLATTEN FÜR EINE SOLCHE SCHEIBE
HAULING PULLEY SHEAVE INCLUDING LINING PLATES, HAULING PULLEY HAVING SUCH SHEAVE AND LINING PLATE FOR SUCH SHEAVE

(43) Date de publication de la demande: 31.05.2017
(73) Titulaire: Etablissements BOPP Treuils JEB, 29160 Crozon (FR)
(72) Inventeur: BONLIEU, Francis, 29150 CHATEAULIN (FR)
(74) Mandataire: Lavoix

(56) Documents cités:
- EP-A1- 0 518 486
- FR-A1- 2 719 356
- FR-A5- 2 114 968
- JP-A- H02 211 820

## Description

La présente invention concerne un réa de poulie de halage utilisé dans les navires de pêche pour relever (ou « virer ») un filet de pêche ou une ligne de pêche.

Une poulie de halage est disposée sur le pont d'un bateau de pêche, et comprend une chape portant un réa qui possède une gorge dans laquelle est engagé le filet de pêche ou la ligne de pêche. Le réa est motorisé afin d'exercer une traction sur le filet de pêche ou la ligne de pêche pour remonter le filet de pêche ou la ligne de pêche sur le bateau. La gorge présente généralement une section en V de façon que le filet de pêche ou la ligne de pêche mis en tension est retenu dans le fond de la gorge par effet de coincement.

Afin de promouvoir l'adhérence du filet de pêche ou de la ligne de pêche sur le réa, il est possible de munir le réa d'un revêtement adhérant garnissant la gorge du réa. Le revêtement est réalisé par exemple en élastomère naturel ou synthétique. Le revêtement est déposé dans la gorge du réa et polymérisé de manière à former un revêtement continu recouvrant entièrement la gorge.

Du fait des conditions d'utilisation sévères et des contraintes mécaniques fortes exercées sur le réa, le revêtement s'use. Il est alors nécessaire de remplacer revêtement. Pour ce faire, l'ancien revêtement usé est retiré et un nouveau revêtement neuf est appliqué. Cette opération est coûteuse et immobilise le réa.

EP0518486A1 et JPH02211820A divulguent chacun une poulie de halage dont le réa possède une gorge à section en V dont les surfaces latérales sont munies de tasseaux réparties sur la circonférence du réa en étant régulièrement espacés.

Un des buts de l'invention est de proposer un réa de poulie de halage dont l'exploitation soit facilitée et dont le coût d'exploitation soit limité.

A cet effet, l'invention propose un réa de poulie de halage selon la revendication 1. Le réa comprend en option une ou plusieurs des caractéristiques définies aux revendications 2 à 10.

L'invention concerne également une poulie de halage selon la revendication 11, une série de plaques de revêtement selon la revendication 12, et une plaque de revêtement selon la revendication 13.

L'invention et ses avantages seront mieux compris à la lecture de la description qui va suivre, donnée uniquement à titre d'exemple, et faite en référence aux dessins annexés, sur lesquels :
- la Figure 1 est une vue de face d'une poulie de halage ; et

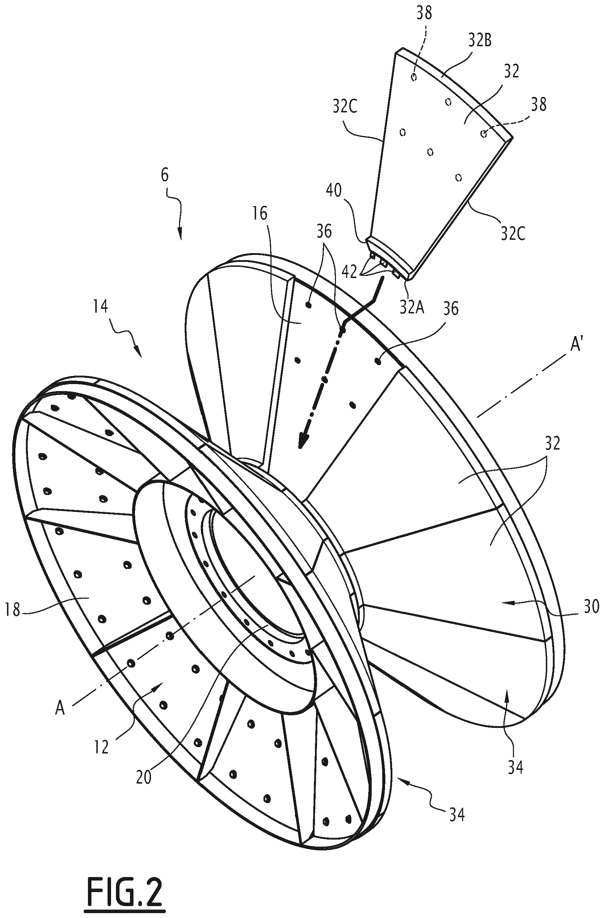

- la Figure 2 est une vue en perspective du réa avec une plaque de revêtement démontée.

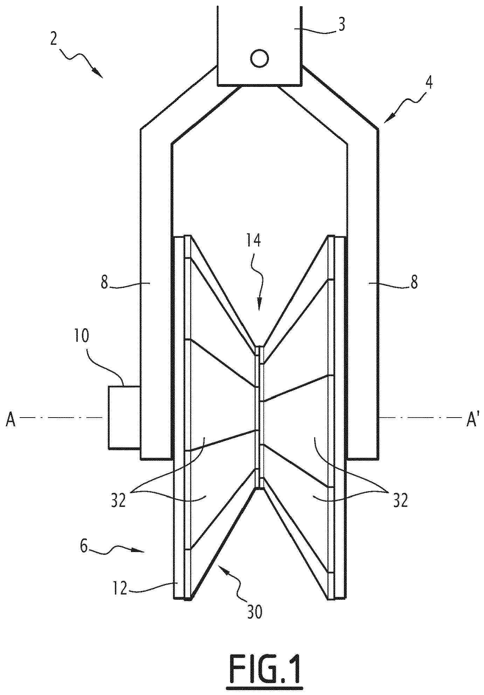

La poulie de halage 2 de la Figure 1 est prévue pour relever (ou « virer ») un filet de pêche ou une ligne de pêche. La poulie de halage 2 est destinée à être montée sur le pont d'un bateau de pêche, de façon à pouvoir remonter un filet de pêche ou une ligne de pêche sur le bateau.

La poulie de halage 2 est par exemple suspendue à un outil de levage 3 tel qu'une grue, prévu sur le pont du bateau. L'outil de levage 3 permet de déplacer la poulie de halage 2 pour ranger le filet de pêche ou la ligne de pêche de manière appropriée sur le pont ou dans une cale du bateau.

La poulie de halage 2 comprend un support 4 et un réa 6 porté par le support 4. Le réa 6 possède un axe A-A' et est monté à rotation autour de son axe A-A' sur le support 4.

Le support 4 est généralement nommé « chape ». Le support 4 présente une forme d'étrier. Le support 4 comprend deux bras 8 délimitant entre eux un espace de réception du réa 6. Le réa 6 est reçu entre les deux bras 8 et monté à rotation autour de son axe A-A' sur les bras 8.

Le réa 6 est motorisé pour son entraînement en rotation autour de son axe A-A'. A cet effet, la poulie de halage 2 comprend un ou plusieurs moteur(s) 10 pour l'entraînement en rotation du réa 6 par rapport au support 4. Chaque moteur 10 est de préférence un moteur hydraulique.

Le réa 6 possède une jante 12 circulaire. La jante 12 s'étend autour de l'axe A-A' du réa 6. La jante 12 possède à sa périphérie une gorge 14 annulaire. La gorge 14 s'étend autour de l'axe A-A' du réa 6.

La gorge 14 possède deux surfaces latérales 16 en regard délimitant la gorge 14. La gorge 14 présente une section en V. Chaque surface latérale 16 définit une branche respective de la section en V de la gorge 14. Les deux surfaces latérales 16 divergent l'une de l'autre depuis le fond de la gorge 14 et radialement vers l'extérieur par rapport à l'axe A-A'.

Le réa 6 possède un revêtement 30 recouvrant les surfaces latérales 16 de la gorge 14. Le revêtement 30 est formé de plaques de revêtement 32 distinctes réparties sur la circonférence de la jante 12.

Chaque plaque de revêtement 32 recouvre une surface latérale 16 de la gorge 14. Chaque plaque de revêtement 32 s'étend sur une fraction de la circonférence de la jante 12. Chaque plaque de revêtement 32 est configurée pour recouvrir un secteur angulaire d'une surface latérale 16 de la gorge 14.

Dans le mode de réalisation suivant l'invention qui est représenté sur les Figures, chaque surface latérale 16 de la gorge 14 est recouverte sensiblement sur toute la circonférence de la jante 12. Les plaques de revêtement 32 recouvrant chaque surface latérale 16 de la gorge 14 sont jointives entre elles.

De préférence, chaque plaque de revêtement 32 s'étend sur un secteur angulaire d'au moins 25°, de préférence compris entre 25° et 35°.

De préférence, les plaques de revêtement 32 sont distinctes. Chaque plaque de revêtement 32 est montée amovible individuellement sur la jante 12. Chaque plaque de revêtement 32 est remplaçable individuellement, sans avoir à remplacer les autres plaques de revêtement 32.

De préférence, le revêtement 30 comprend deux séries 34 de plaques de revêtement 32 recouvrant chacune une surface latérale 16 respective de la gorge 14. Chaque plaque de revêtement 32 recouvre un secteur angulaire d'une surface latérale 16 de la gorge 14. Chaque plaque de revêtement 32 possède la forme d'un secteur angulaire de tronc de cône.

De préférence, chaque plaque de revêtement 32 est fixée de manière amovible sur la jante 12 par vissage. A cette effet, la jante 12 possède des orifices 36 répartis sur chaque surface latérale 16 de la gorge 14, et chaque plaque de revêtement 32 est munie de trous taraudés 38 correspondants. Les trous taraudés 38 sont prévus sur une face inférieure de de la plaque de revêtement 34 prévue pour être appliquée contre la jante 12.

Chaque plaque de revêtement 32 est ainsi fixée à l'aide d'une ou plusieurs vis, chacune engagée dans un orifice 36 de la jante 12 et vissée dans un trou taraudé 38 de la plaque de revêtement 32.

Les plaques de revêtement 32 de chaque série 34 sont réparties angulairement sur la circonférence de la jante 12 en étant jointives circonférentiellement. Chaque plaque de revêtement 32 d'une série 34 est jointive avec chacune des deux plaques de revêtement 32 adjacentes de la série entre lesquelles la plaque de revêtement 32 est disposée. Chaque surface latérale 16 de la gorge 14 est ainsi entièrement recouverte par une série 34 de plaques de revêtement 32. Les plaques de revêtement 32 d'une série 34 assurent entre elle une continuité de surface. Le revêtement 30 définit une surface tronconique lisse le long de chaque surface latérale 16 de la gorge 14.

De préférence, les plaques de revêtement 32 de chaque série 34 sont jointives des plaques de revêtement 32 de l'autre série 34 au fond de la gorge 14 suivant une ligne de contact annulaire au fond de la gorge 14.

De préférence, chaque plaque de revêtement 32 possède un bord interne 32A prévu pour s'étendre le long du fond de la gorge 14 et un bord externe 32B opposé. Le bord externe 32B est prévu pour s'étendre le long du bord périphérique libre de la surface latérale 16.

De préférence, chaque plaque de revêtement 32 possède deux bords radiaux 32C s'étendant radialement du fond de la gorge 14 vers l'extérieur. Les plaques de revêtement 32 de chaque série 34 de plaques de revêtement 32 sont jointives par leurs bords radiaux 32C adjacents. Chaque bord radial 32C d'une plaque de revêtement 32 d'une série 34 est en contact avec un bord radial 32C d'une plaque de revêtement 32 adjacente de cette série 34.

De préférence, chaque plaque de revêtement 32 d'une série 34 est jointive, au fond de la gorge 14, d'au moins une plaque de revêtement 32 de l'autre série. Les plaques de revêtement 32 de chaque série 34 présentent ici un décalage angulaire autour de l'axe A-A' avec les plaques de revêtement 32 de l'autre série 34. Le décalage angulaire est strictement inférieur au secteur angulaire couvert par chaque plaque de revêtement 32. Ainsi, chaque plaque de revêtement 32 d'une série 34 chevauche deux plaques de revêtement 32 de l'autre série 34, situées en regard.

De préférence, chaque plaque de revêtement 32 possède un talon 40 destiné à être disposé au fond de la gorge 14. Le talon 40 présente la forme d'un coin. Le talon 40 s'amincit vers le fond de la gorge 14 lorsque la plaque de revêtement 32 est fixée sur la jante 12. Le talon 40 s'étend le long du bord interne 32A de la plaque de revêtement 32. Le talon s'amincit vers le bord interne 32A de la plaque de revêtement 32.

Les talons 40 de deux plaques de revêtement 32 placées sur les surfaces latérales 16 en regard l'une de l'autre sont coincés l'un contre l'autre et assurent un blocage efficace des plaques de revêtement 32 dans le fond de la gorge 14.

De préférence, chaque plaque de revêtement 32 est munie d'au moins une dent 42 faisant saillie vers le fond la gorge 14 lorsque la plaque de revêtement 32 est fixée sur la jante 32. Chaque dent 42 est en saillie sur le bord interne 32A de la plaque de revêtement 32, radialement vers l'intérieur par rapport à l'axe A-A' lorsque la plaque de revêtement 32 est fixée sur la jante 12. Chaque plaque de revêtement 32 est ici munie de plusieurs dents 42 formant une denture. En variante, une plaque de revêtement 32 est munie d'une seule dent.

Les dents 42 des plaques de revêtement 32 d'une série 34 s'intercalent avec les dents 42 des plaques de revêtement 32 de l'autre série. Les dents 42 intercalées des plaques de revêtement 32 recouvrant les surfaces latérales 16 opposés assurent une liaison des plaques de revêtement 32 autour de l'axe A-A' à la manière d'un engrenage.

Chaque plaque de revêtement 32 est réalisée par exemple en matériau élastomère. Le matériau élastomère est un matériau élastomère naturel ou synthétique.

Le talon 40 est formé par une surépaisseur de la plaque de revêtement 32 le long de son bord interne 32A. Les dents 42 sont par exemple prévues sous la forme d'inserts métalliques en partie surmoulés par la plaque de revêtement 32 et qui font saillie du bord interne 32A de la plaque de revêtement 32. Les trous taraudés 38 sont par exemple formés dans par des inserts métalliques surmoulés par la plaque de revêtement 32.

Le réa 6 possède un diamètre extérieur compris entre 0 et 3 m. Le réa 6 présente un diamètre en fond de gorge 14 comprise entre 0 et 2 m.

En fonctionnement, un filet de pêche à relever est engagé dans la gorge 14 du réa 6. Le réa 6 est entraîné en rotation par rapport de façon à exercer une traction sur le filet de pêche et le remonter sur le bateau. L'adhérence du réa 6 sur le filet de pêche est assurée par la présence du revêtement et aussi par effet de coincement du filet dans le fond de la gorge 14.

En cas d'usure excessive d'une ou plusieurs plaques de revêtement 32, il est possible de retirer uniquement ces plaques de revêtement 32 usées, sans retirer les plaques de revêtement présentant une usure acceptable, et de les remplacer par des plaques de revêtement 32 neuves.

Il est possible d'effectuer le changement d'une ou plusieurs plaques de revêtement 32 sans démonter la poulie de halage. Il est possible d'effectuer le changement d'une ou plusieurs plaques de revêtement 32 sur le bateau, sans déposer le réa 6. Ainsi, le réa 6 reste disponible pendant une campagne de pêche. Il est possible d'embarquer des plaques de revêtement 32 de rechange sur le bateau, pour effectuer des changements de plaques de revêtement 32 pendant la campagne de pêche. L'exploitation de la poulie de halage 2 est donc facilitée et son coût est réduit.

L'invention n'est pas limitée au mode de réalisation illustré. Des variantes de réalisation sont possibles dans le cadre de l'invention tel que défini par les revendications suivantes.

## Revendications

1. Réa (6) de poulie de halage (2) pour relever une ligne de pêche ou un filet de pêche, le réa (6) comprenant une jante (12) munie sur son pourtour d'une gorge (14) annulaire délimitée par deux surfaces latérales (16), et un revêtement d'usure disposé sur les surfaces latérales (16) de la gorge (14), le revêtement étant formé de plaques de revêtement disposées sur les surfaces latérales (16) de la gorge (14), chaque surface latérale (16) de la gorge (14) étant recouverte par plusieurs plaques de revêtement réparties sur la circonférence de la jante (12), chaque plaque de revêtement s'étendant sur une fraction de la circonférence de la jante (12), ledit réa (6) étant **caractérisé en ce que** chaque surface latérale (16) est recouverte par les plaques de revêtement sur sensiblement toute la circonférence de la jante (12), les plaques de revêtement recouvrant chaque surface latérale (16) étant jointives entre elles.

2. Réa selon la revendication 1, dans lequel chaque plaque de revêtement s'étend sur un secteur angulaire d'au moins 25°.

3. -Réa selon l'une quelconque des revendications précédentes, dans lequel chaque plaque de revêtement s'étend sur un secteur angulaire compris entre 25° et 35°.

4. -Réa selon l'une quelconque des revendications précédentes, dans lequel chaque plaque de revêtement est fixée de manière amovible sur la jante (12) et remplaçable individuellement.

5. -Réa selon l'une quelconque des revendications précédentes, dans lequel chaque plaque de revêtement est fixée sur la jante (12) par vissage.

6. -Réa selon l'une quelconque des revendications précédentes, dans lequel le revêtement comprend deux séries (34) de plaques de revêtement (32) réparties sur la circonférence de la jante (12), chaque série (34) de plaques de revêtement (32) recouvrant une surface latérale (16) respective de la gorge (14).

7. Réa selon la revendication 6, dans lequel les plaques de revêtement (32) d'une série (34) sont jointives avec celles de l'autre série (34) suivant une ligne de jonction annulaire au fond de la gorge (14).

8. -Réa selon l'une quelconque des revendications précédentes, dans lequel chaque plaque de revêtement est réalisée en matériau élastomère.

9. -Réa selon l'une quelconque des revendications précédentes, dans lequel au moins une plaque de revêtement (32) est munie de dents (42) sur un bord (32A) de la plaque de revêtement (32) prévu pour s'étendre le long du fond de la gorge (14).

10. Réa selon la revendication 9, dans lequel les dents (42) des plaques de revêtement (32) disposées sur une surface latérale (16) s'intercalent avec les dents (42) des plaques de revêtement (32) disposées sur l'autre surface latérale (16).

11. -Poulie de halage (2) pour relever une ligne de pèche ou un filet de pêche, comprenant un réa (6) selon l'une quelconque des revendications précédentes.

12. -Série de plaques de revêtement pour former un revêtement d'usure sur un réa (6) de poulie de halage (2) pour relever une ligne de pèche ou un filet de pêche, le réa (6) comprenant une jante (12) munie sur son pourtour d'une gorge (14) ayant deux surfaces latérales (16), les plaques de revêtement étant prévues pour revêtir une surface latérale (16) de la gorge (14), chaque plaque de revêtement recouvrant une fraction de la circonférence de la jante (12), les plaques de revêtements étant propres à être réparties sur la circonférence de la jante (12) en étant jointives et en recouvrant la surface latérale sur sensiblement toute la circonférence de la jante (12).

13. -Plaque de revêtement pour une série de plaques de revêtement selon la revendication 12.

## Patentansprüche

1. Seilscheibe (6) für Einhol-Seilscheibeneinrichtung (2) zum Ausbringen einer Fischerleine oder eines Fischernetzes, wobei die Seilscheibe (6) aufweist eine Felge (12), die an ihrem Umfang mit einer ringförmigen Hohlkehle (14) versehen, die von zwei seitlichen Fläche (16) begrenzt ist, und eine Verschleißbeschichtung, die auf den seitlichen Flächen (16) der Hohlkehle (14) angeordnet ist, wobei die Beschichtung von Beschichtungsplatten gebildet ist, die auf den seitlichen Flächen (16) der Hohlkehle (14) angeordnet sind, wobei jede seitliche Fläche (16) der Hohlkehle (14) durch mehrere Beschichtungsplatten abgedeckt ist, die über den Umfang der Felge (12) verteilt sind, wobei jede Beschichtungsplatte sich über einen Teil des Umfangs der Felge (12) erstreckt, wobei die Seilscheibe (6) **dadurch gekennzeichnet ist, dass** jede seitliche Fläche (16) von den Beschichtungsplatten über im Wesentlichen den gesamten Umfang der Felge (12) abgedeckt ist, wobei die Beschichtungsplatten, die jede seitliche Fläche (16) abdecken, aneinandergesetzt sind.

2. Seilscheibe gemäß Anspruch 1, wobei jede Beschichtungsplatte sich über einen Winkelbereich von wenigstens 25° erstreckt.

3. Seilscheibe gemäß irgendeinem der vorherigen Ansprüche, wobei jede Beschichtungsplatte sich über einen Winkelberiech von zwischen 25° und 35° erstreckt.

4. Seilscheibe gemäß irgendeinem der vorherigen Ansprüche, wobei jede Beschichtungsplatte in lösbarer Weise an der Felge (12) befestigt ist und individuell auswechselbar ist.

5. Seilscheibe gemäß irgendeinem der vorherigen Ansprüche, wobei jede Beschichtungsplatte via Schrauben an der Felge (12) befestigt ist.

6. Seilscheibe gemäß irgendeinem der vorherigen Ansprüche, wobei die Beschichtung zwei Reihen (34) von Beschichtungsplatten (32) aufweist, die über den Umfang der Felge (12) verteilt sind, wobei jede Reihe (34) von Beschichtungsplatten (32) eine jeweils zugeordnete seitliche Fläche (16) der Hohlkehle (14) abdeckt.

7. Seilscheibe gemäß Anspruch 6, wobei die Beschichtungsplatten (32) einer Reihe (34) an jene der anderen Reihe (34) angesetzt sind entlang einer ringförmigen Verbindungslinie am Boden der Hohlkehle (14).

8. Seilscheibe gemäß irgendeinem der vorherigen Ansprüche, wobei jede Beschichtungsplatte aus einem elastomeren Material gemacht ist.

9. Seilschiebe gemäß irgendeinem der vorherigen Ansprüche, wobei wenigstens eine Beschichtungsplatte (32) mit Zähnen (42) an einem Rand (32A) der Beschichtungsplatte (32) versehen ist, vorgesehen, um sich entlang des Bodens der Hohlkehle (14) zu erstrecken.

10. Seilscheibe gemäß Anspruch 9, wobei die Zähne (42) der Beschichtungsplatten (32), die auf einer seitlichen Fläche (16) angeordnet sind, mit den Zähnen (42) der Beschichtungsplatten (32) kämmen, die auf der anderen seitlichen Fläche (16) angeordnet sind.

11. Einhol-Seilscheibeneinrichtung (2) zum Ausbringen einer Fischerleine oder eines Fischernetzes, aufweisend eine Seilscheibe (6) gemäß irgendeinem der vorherigen Ansprüche.

12. Serie von Beschichtungsplatten zum Bilden einer Verschleißbeschichtung auf einer Seilscheibe (6) einer Einhol-Seilscheibeneinrichtung (2) zum Ausbringen einer Fischerleine oder eines Fischernetzes, wobei die Seilscheibe (6) eine Felge (12) aufweist, die an ihrem Umfang mit einer Hohlkehle (14) versehen ist, die zwei seitliche Flächen (16) hat, wobei die Beschichtungsplatten vorgesehen sind zum Beschichten einer seitlichen Fläche (16) der Hohlkehle (14), wobei jede Beschichtungsplatte einen Teil des Umfangs der Felge (12) abdeckt, wobei die Beschichtungsplatten imstande sind, über den Umfang der Felge (12) verteilt zu werden unter Aneinandersetzen von ihnen und unter Abdecken der seitlichen Fläche über im Wesentlichen den gesamten Umfang der Felge (12) .

13. Beschichtungsplatte für eine Serie von Beschichtungsplatten gemäß Anspruch 12.

## Claims

1. Sheave (6) of a hauling pulley (2) for raising a fishing line or a fishing net, the sheave (6) comprising a rim (12) equipped on its periphery with an annular groove (14) delimited by two lateral surfaces (16), and a wear lining arranged on the lateral surfaces (16) of the groove (14), the lining being formed of lining plates arranged on the lateral surfaces (16) of the groove (14), each lateral surface (16) of the groove (14) being covered with multiple lining plates distributed over the circumference of the rim (12), each lining plate extending over a fraction of the circumference of the rim (12), said sheave (6) being **characterised in that** each lateral surface (16) is covered by the lining plates over substantially the entire circumference of the rim (12), the lining plates that cover each lateral surface (16) being contiguous with one another.

2. Sheave according to claim 1, wherein each lining plate extends over an angular sector of at least 25°.

3. Sheave according to any one of the preceding claims, wherein each lining plate extends over an angular sector of between 25° and 35°.

4. Sheave according to any one of the preceding claims, wherein each lining plate is removably fixed to the rim (12) and is individually replaceable.

5. Sheave according to any one of the preceding claims, wherein each lining plate is fixed to the rim (12) by screwing.

6. Sheave according to any one of the preceding claims, wherein the lining comprises two series (34) of lining plates (32) distributed over the circumference of the rim (12), each series (34) of lining plates (32) covering a respective lateral surface (16) of the groove (14).

7. Sheave according to claim 6, wherein the lining plates (32) of a series (34) are contiguous with those of the other series (34) along an annular joining line at the bottom of the groove (14).

8. Sheave according to any one of the preceding claims, wherein each lining plate is made of elastomeric material.

9. Sheave according to any one of the preceding claims, wherein at least one lining plate (32) is equipped with teeth (42) on an edge (32A) of the lining plate (32) provided to extend along the bottom of the groove (14).

10. Sheave according to claim 9, wherein the teeth (42) of the lining plates (32) arranged on one lateral surface (16) mesh with the teeth (42) of the lining plates (32) arranged on the other lateral surface (16).

11. Hauling pulley (2) for raising a fishing line or a fishing net, comprising a sheave (6) according to any one of the preceding claims.

12. Series of lining plates for forming a wear lining on a sheave (6) of a hauling pulley (2) for raising a fishing line or a fishing net, the sheave (6) comprising a rim (12) equipped on its periphery with a groove (14) having two lateral surfaces (16), the lining plates being provided to line a lateral surface (16) of the groove (14), each lining plate covering a fraction of the circumference of the rim (12), the lining plates being capable of being distributed over the circumference of the rim (12) while being contiguous and while covering the lateral surface over substantially the entire circumference of the rim (12).

13. Lining plate for a series of lining plates according to claim 12.
